# EUROPEAN PATENT SPECIFICATION

(11) **EP 3 993 455 B1**
(45) Date of publication and mention of the grant of the patent: **07.08.2024**
(21) Application number: 20841278.3
(22) Date of filing: 15.06.2020
(51) Int. Cl.: H04W 4/06, H04L 1/16, H04W 24/02, H04L 1/18, H04L 1/00

(54) **COMMUNICATION METHOD, APPARATUS AND SYSTEM**
KOMMUNIKATIONSVERFAHREN, -VORRICHTUNG UND -SYSTEM
PROCÉDÉ, APPAREIL ET SYSTÈME DE COMMUNICATION

(30) Priority: 15.07.2019 CN 201910637441
(43) Date of publication of application: 04.05.2022
(73) Proprietor: Huawei Technologies Co., Ltd., Longgang District Shenzhen, Guangdong 518129 (CN)
(72) Inventor: XU, Bin, Shenzhen, Guangdong 518129 (CN); LI, Bingzhao, Shenzhen, Guangdong 518129 (CN); CHEN, Lei, Shenzhen, Guangdong 518129 (CN); WANG, Hong, Shenzhen, Guangdong 518129 (CN); WANG, Xuelong, Shenzhen, Guangdong 518129 (CN)
(74) Representative: Gill Jennings & Every LLP
(86) International application number: PCT/CN2020/096164
(87) International publication number: WO 2021/008286

(56) References cited:
- CN-A- 101 577 860
- CN-A- 102 057 608
- CN-A- 106 254 044
- CN-A- 109 982 266
- US-A1- 2006 154 603
- US-A1- 2010 226 243
- US-A1- 2010 226 243
- US-A1- 2011 096 710

## Description

### TECHNICAL FIELD

Embodiments of this application relate to the field of wireless communication, and in particular, to a communication method, apparatus, and system.

### BACKGROUND

In network communication, a multicast or multicast transmission technology is a transmission technology in which one sender sends data and a plurality of receivers attempt to receive the data. For example, a base station sends data, and a plurality of terminals attempt to receive the data.

In the field of wireless communication, data needs to be transmitted through a physical (physical layer, PHY) layer, a media access control (media access control layer, MAC) layer, a radio link control (wireless link control, RLC) layer, a packet data convergence protocol (packet data convergence protocol, PDCP) layer, and the like.

During multicast transmission, data is transmitted through the RLC layer in an unacknowledged mode (unacknowledged mode, UM). The UM mode is an unreliable transmission mode. Consequently, an existing multicast transmission mode has relatively low reliability.

US 2006/154603 A1 describes a method and device for data transmission with ARQ protocol using multicast groups such as GSM, GPRS, or UMTS in a mobile communication system. US 2010/226243 A1 describes a method and apparatus for multicast transmission of a transmitting station in a wireless network. US 2011/096710 A1 describes an apparatus for requesting acknowledgement and transmitting acknowledgement of multicast data in wireless local.

### SUMMARY

Embodiments of this application provide a communication method, apparatus, and system. The invention is set out in the appended set of claims.

According to a first aspect, a communication method is provided. A first apparatus determines, in parallel, by a first apparatus, that at least one of the following conditions is triggered: the first apparatus receives indication information from a second apparatus, wherein the indication information is used to indicate to report a receiving status of a data protocol data unit, PDU; a first timer expires, wherein duration of the first timer is T, and T is greater than 0, wherein the first timer is used to periodically report receiving statuses of data PDUs; a respective entity in the first apparatus receives a first data PDU, wherein the first data PDU is the 1st PDU received by the entity after the entity is established in the first apparatus; and the first apparatus determines, based on a sequence number, that a data PDU fails to be received. The first apparatus determines a first status protocol data unit (protocol data unit, PDU), wherein the first status PDU is used to indicate a receiving status of at least one data PDU from the second apparatus, and the at least one data PDU is sent by the second apparatus (82) in a multicast mode. The first apparatus sends the first status PDU to the second apparatus.

The first apparatus feeds back the receiving status of the data PDU to the second apparatus, and the second apparatus may determine, based on a requirement of a multicast service and by analyzing the receiving status of the data PDU, whether the data PDU needs to be resent. Therefore, reliability of the multicast service is improved.

In a possible implementation, before determining the first status PDU, the first apparatus determines that at least one of the following conditions is triggered:

In a possible implementation, when determining that the first data PDU fails to be received, the first apparatus may receive a second data PDU, where the second data PDU is the 1^{st} PDU received by the first apparatus, a sequence number (Sequence number, SN) of the second data PDU is greater than a first sequence number, and the first sequence number is a sequence number that is of the first data PDU and that is indicated by the second apparatus. Specifically, the 1^{st} PDU is the 1^{st} PDU received by an entity after the entity is established, where the entity is in the first apparatus and is configured to receive a data PDU. Specifically, the first sequence number is a sequence number, indicated by the second apparatus, of the 1^{st} data PDU that should be received by the first apparatus. Alternatively, a sequence number of the first data PDU is a first sequence number, and the first apparatus receives at least one data PDU whose sequence number is greater than the first sequence number and at least one data PDU whose sequence number is less than the first sequence number.

When determining that the data PDU fails to be received, the first apparatus feeds back the receiving status of the data PDU to the second apparatus, so that the second apparatus learns of a data PDU that is not received by the first apparatus, and the second apparatus may determine, based on the requirement of the multicast service, whether to resend the data PDU. Therefore, the reliability of the multicast service is improved.

In a possible implementation, the indication information used to indicate to report the receiving status of the data PDU is carried in a third data PDU, a control PDU, media access control control element MAC CE signaling, or downlink control information DCI. The third data PDU may be any data PDU sent by the second apparatus to the first apparatus in the multicast mode.

In a possible implementation, the indication information used to indicate to report the receiving status of the data PDU is further used to indicate at least one of a plurality of apparatuses to report a receiving status of the data PDU, and the first apparatus is included in the at least one apparatus.

The second apparatus may indicate a specific apparatus that is configured to report a receiving status of the data PDU. When determining that the apparatus indicated by the second apparatus includes the first apparatus, the first apparatus reports the data PDU. If the apparatus does not include the first apparatus, the first apparatus does not need to perform reporting even if the first apparatus receives the indication information. This reduces signaling overheads for feeding back the receiving status of the data PDU.

According to a second aspect, a communication method is provided. A second apparatus sends a first data PDU to at least one apparatus in a multicast mode, where a sequence number of the first data PDU is X, and X is a natural number greater than or equal to 0.

The second apparatus resends the first data PDU to the at least one apparatus in the multicast mode, or the second apparatus determines that the first data PDU is not successfully received by a third apparatus and sends the first data PDU to the third apparatus in a unicast mode, where the third apparatus is included in the at least one apparatus.

The second apparatus may resend the data PDU, thereby improving reliability of multicast transmission.

In a possible implementation, when determining that a first condition is met, the second apparatus sends a second data PDU to the at least one apparatus in the multicast mode, where a sequence number of the second data PDU is X+n, and n is a natural number greater than or equal to 1. The first condition is that a quantity of apparatuses that successfully receive the first data PDU in the at least one apparatus meets a first threshold, or the first condition is that a first timer expires, where the first timer is started when the second apparatus sends the first data PDU.

In a possible implementation, the second apparatus receives at least one status PDU; and
the second apparatus determines, based on the at least one status PDU, a receiving status in the at least one apparatus of the first data PDU.

In a possible implementation, the second apparatus may send indication information to a fourth apparatus, where the fourth apparatus is included in the at least one apparatus. A quantity of consecutive data PDUs that are not received by the fourth apparatus reaches a second threshold, and the consecutive data PDUs that are not received are sent by the second apparatus in the multicast mode.

In a possible implementation, the indication information is used to indicate the fourth apparatus to suspend receiving of a data PDU sent by the second apparatus in the multicast mode; the indication information is used to indicate the fourth apparatus to release or delete first configuration information, where the first configuration information is used to configure the fourth apparatus to receive a data PDU in the multicast mode; or the indication information is used to indicate the fourth apparatus to release or delete second configuration information, where the second configuration information is used to configure the fourth apparatus to provide a feedback for data that the fourth apparatus attempts to receive in the multicast mode.

According to a third aspect, a communication system is provided. The communication system includes a first apparatus and a second apparatus that implement any one of the foregoing aspects and the possible implementations of the foregoing aspects.

In a possible implementation, the communication system further includes another apparatus that is in a same multicast group or multicast area as the first apparatus.

According to a fourth aspect, a communication apparatus is provided. The apparatus has a function module for implementing the method according to any one of the foregoing aspects and the possible implementations of the foregoing aspects. The function module may be implemented by hardware, or may be implemented by hardware by executing corresponding software. The hardware or the software includes one or more modules corresponding to the foregoing function.

In a possible implementation, the apparatus may be a chip or an integrated circuit.

In a possible implementation, the apparatus includes a memory and at least one processor. The memory is configured to store a program. The processor is configured to execute the program, to implement the method according to any one of the foregoing aspects and the possible implementations of the foregoing aspects.

In a possible implementation, the apparatus further includes a transceiver. The transceiver is configured to send and receive data under control of the processor.

According to a fifth aspect, a communication apparatus is provided. The apparatus includes a processing unit and a transceiver unit. The processing unit may be implemented by using the processor in any one of the foregoing aspects and the possible implementations of the foregoing aspects, and the transceiver unit may be implemented by using the transceiver in any one of the foregoing aspects and the possible implementations of the foregoing aspects. The processing unit may perform the method according to any one of the foregoing aspects and the possible implementations of the foregoing aspects based on a function of sending and receiving messages by the transceiver unit.

According to a sixth aspect, a computer-readable storage medium is provided. The computer storage medium stores computer-readable instructions. When a computer reads and executes the computer-readable instructions, the computer is enabled to perform the method according to any one of the foregoing aspects and the possible implementations of the foregoing aspects.

According to a seventh aspect, a computer program product is provided. When a computer reads and executes the computer program product, the computer is enabled to perform the method according to any one of the foregoing aspects and the possible implementations of the foregoing aspects.

According to an eighth aspect, a chip is provided. The chip is coupled to a memory, and is configured to read and execute a software program stored in the memory, to implement the method according to any one of the foregoing aspects and the possible implementations of the foregoing aspects.

### BRIEF DESCRIPTION OF DRAWINGS

FIG. 1 is a diagram of a communication system according to an embodiment of this application;
FIG. 2 is a schematic diagram of data transmission according to an embodiment of this application;
FIG. 3A is a schematic diagram of a communication architecture according to an embodiment of this application;
FIG. 3B is a schematic diagram of another communication architecture according to an embodiment of this application;
FIG. 4 is a schematic diagram of a communication process according to an embodiment of this application;
FIG. 5 is a schematic diagram of a communication process according to an embodiment of this application;
FIG. 6 is a diagram of a structure of a communication apparatus according to an embodiment of this application;
FIG. 7 is a diagram of a structure of a communication apparatus according to an embodiment of this application; and
FIG. 8 is a diagram of a structure of a communication system according to an embodiment of this application.

### DETAILED DESCRIPTION OF EMBODIMENTS

The following describes embodiments of this application in detail with reference to the accompanying drawings.

For ease of understanding the embodiments of this application, the following describes some terms in the embodiments of this application, to help persons skilled in the art have a better understanding.
(1) A network device is a device that can provide a random access function for a terminal device or a chip that can be disposed in the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like, may be a gNB or a transmission point (TRP or TP) in a 5G system such as an NR system or one or one group of antenna panels (including a plurality of antenna panels) of a base station in a 5G system, or may be a network node forming a gNB or a transmission point, for example, a baseband unit (BBU) or a distributed unit (distributed unit, DU).
(2) A terminal is also be referred to as user equipment (user equipment, UE), a mobile station (mobile station, MS), a mobile terminal (mobile terminal, MT), or the like, and is a device that provides a user with voice and/or data connectivity. For example, the terminal device includes a handheld device, a vehicle-mounted device, or the like that has a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.
(3) That a data PDU is sent or transmitted in a multicast (multicast) mode means: When sending a transport block (transport block, TB) corresponding to the data PDU, an apparatus scrambles the data PDU or downlink control information (downlink control information, DCI) corresponding to the data PDU by using a group radio network temporary identifier (group radio network temporary identifier, G-RNTI), and one or more apparatuses simultaneously attempt to receive the same data PDU based on the same G-RNTI. Alternatively, that a data PDU is transmitted in a multicast mode may mean: A location of the same data PDU is notified to a plurality of apparatuses in a semi-persistent manner, and the plurality of apparatuses may simultaneously attempt to receive the data PDU. Alternatively, that a data PDU is transmitted in a multicast mode may mean: The PDU is transmitted on a radio bearer established for multicast transmission or on a channel specially designed for multicast.

Correspondingly, that the data PDU is received in the multicast mode means: When sending is performed in the multicast mode, one of the plurality of receiving apparatuses attempts to receive the data PDU based on the G-RNTI, or one of the plurality of receiving apparatuses attempts to receive the data PDU on the radio bearer established for multicast transmission or on the channel used for multicast transmission.

In this application, multicast is a specific mode of multicast. Therefore, multicast may also be referred to as multicast.

(4) That a data PDU is sent or transmitted in a unicast (unicast) mode means: When sending a TB corresponding to the data PDU, an apparatus scrambles the data PDU or DCI corresponding to the data PDU by using a cell radio network temporary identifier (cell network temporary identifier, C-RNTI), and only one apparatus attempts to receive the same data PDU based on the C-RNTI. Alternatively, that a data PDU is transmitted in a unicast mode may mean: The PDU is transmitted on a radio bearer established for unicast transmission or on a channel specially designed for unicast.

Correspondingly, that the data PDU is received in the unicast mode means: When sending is performed in the unicast mode, the receiving apparatus attempts to receive the data PDU based on the C-RNTI, or the apparatus attempts to receive the data PDU on the radio bearer established for unicast transmission or on the channel used for unicast transmission.

(5) That a data PDU is sent or transmitted in a broadcast (broadcast) mode means: An apparatus sends a TB corresponding to the data PDU on a broadcast channel, and all receiving apparatuses may attempt to receive the data PDU on the broadcast channel.

The term "and/or" in this application describes an association relationship between associated objects and represents that three relationships may exist. For example, A and/or B may represent the following three cases: Only A exists, both A and B exist, and only B exists. The character "/" generally represents an "or" relationship between the associated objects.

In this application, "a plurality of" refers to two or more than two.

In the descriptions of this application, terms such as "first" and "second" are used only for distinction and description, but cannot be understood as indicating or implying relative importance, or as indicating or implying a sequence.

In addition, the term "for example" in the embodiments of this application is used to represent giving an example, an illustration, or a description. Any embodiment or implementation solution described as an "example" in this application should not be explained as being more preferred or having more advantages than another embodiment or implementation solution. Exactly, the term "example" is used to present a concept in a specific manner.

A service scenario described in the embodiments of this application is intended to describe technical solutions in the embodiments of this application more clearly, but constitute no limitation on the technical solutions provided in the embodiments of this application. Persons of ordinary skill in the art may learn that the technical solutions provided in the embodiments of this application are also applicable to a similar technical problem as a new service scenario emerges.

The embodiments of this application provide a communication method, apparatus, and system. The method, the apparatus, and the system are based on a same technical concept. Because problem-resolving principles of the method, the apparatus, and the system are similar, mutual reference may be made to implementations of the apparatus, the system, and the method. Repeated parts are not described.

The technical solutions in the embodiments of this application may be applied to various communication systems, for example, a long term evolution (long term evolution, LTE) system, a worldwide interoperability for microwave access (worldwide interoperability for microwave access, WiMAX) communication system, a future 5th generation (5th Generation, 5G) system, for example, a new radio access technology (new radio access technology, NR) system, and a future communication system.

This application is applicable to a terrestrial communication system, or is applicable to a non-terrestrial communication system, for example, a communication system in which a base station is located on a satellite or another flight device, or a communication system in which a satellite or a flight device is used as a relay for forwarding. Alternatively, this application is applicable to a 5G architecture-based scenario in which communication is performed by using an unlicensed spectrum, for example, an NR-U (new radio-unlicensed) scenario.

As long as an entity in the communication system needs to send transmission direction indication information, and another entity needs to receive the indication information and determines a transmission direction of a specific time period based on the indication information, this application is applicable to the communication system.

In the communication system, one apparatus sends data, and a plurality of apparatuses attempt to receive the data. The plurality of apparatuses for receiving the data each feed back a receiving status of the data to the apparatus that sends the data. The receiving status of the data indicates whether the data is received. In this application, the data may be a data PDU, or may be data of another type. An example in which the data is the data PDU is used for description in the following implementations described in this application. Persons skilled in the art should understand that, for data of another type, the technical solutions provided in this application are also applicable.

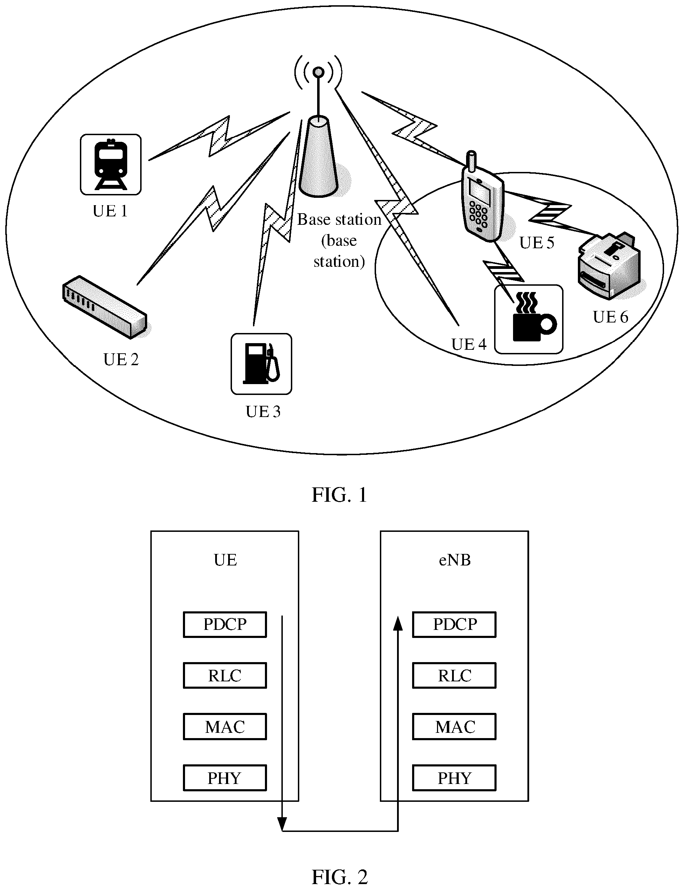

For ease of understanding of the embodiments of this application, the following describes an application scenario of this application by using a communication system shown in FIG. 1. As shown in FIG. 1, a network device (a base station (Base station)) and UE 1 to UE 6 form the communication system. In the communication system, the base station may send a data PDU to the UE 1 to the UE 6 in a multicast mode, and the UE 1 to the UE 6 may attempt to receive, in the multicast mode, the data PDU sent by the base station and feed back receiving statuses of the data PDU to the base station in a unicast mode. An apparatus that sends the data PDU is the base station, and apparatuses for receiving the data PDU are the terminals UE 1 to UE 6. The UE 1 to the UE 6 may be considered as a plurality of UEs that attempt to receive a same multicast service in a same time period, and these UEs may be in a same multicast group or in a same multicast area (including one or more cells).

In addition, the UE 4 to the UE 6 may also form a communication system. In the communication system, the UE 5 may send a data PDU to the UE 4 and the UE 6 in the multicast mode, and the UE 4 and the UE 6 may feed back receiving statuses of the data PDU to the UE 5 in the unicast mode. An apparatus that sends the data PDU is the UE 5, and apparatuses for receiving the data PDU are the UE 4 and the UE 6. The UE 4 and the UE 6 may be considered as a plurality of UEs that attempt to receive a same multicast service in a same time period, and these UEs may be in a same multicast group or in a same multicast area, where the multicast area includes one or more cells.

This application is not only applicable to a scenario in which one network device transmits a data PDU to a plurality of UEs, but also applicable to a scenario in which a plurality of network devices cooperate to transmit a data PDU to a plurality of UEs, for example, a multimedia broadcast multicast service single frequency network (multicast broadcast single frequency network, MBSFN).

In the field of wireless communication, a data PDU needs to be transmitted through a physical (physical layer, PHY) layer, a media access control (media access control layer, MAC) layer, a radio link control (wireless link control, RLC) layer, a packet data convergence protocol (packet data convergence protocol, PDCP) layer, and the like. FIG. 2 is a schematic flowchart of transmitting information by UE to a network device (eNB). The information may be a data PDU, a control PDU, or the like.

An RLC layer is located above a MAC layer, is a part of L2, and provides segmentation and retransmission services for user data and control data. Based on service types, the RLC layer has three working modes: a transparent mode (transparent mode, TM), an unacknowledged mode (unacknowledged mode, UM), and an acknowledged mode (acknowledged mode, AM). In the TM mode, the RLC layer provides only a data transparent transmission (pass through) function. In the UM mode, the RLC layer provides all RLC functions except data retransmission and re-segmentation, and consequently provides an unreliable transmission service. In the AM mode, the RLC layer provides all the RLC functions including the retransmission function, and therefore provides a reliable transmission service.

Currently, when unicast transmission is performed, the RLC layer may work in any one of the foregoing three working modes. When multicast transmission is performed, the RLC layer may work only in the UM mode, and the UM mode is an unreliable transmission mode. In some multicast application scenarios, some services, for example, a service in an industrial scenario or a batch UE software update service, have a relatively high requirement on reliability. If a data packet is lost, software update fails, and update needs to be performed again. In the current technology, the UM mode is used for transmission. Therefore, if some UEs do not receive data packets, a packet loss occurs, and reliability of service transmission is affected. Based on this, this application provides a communication method. An apparatus for receiving a data PDU feeds back a receiving status of the data to an apparatus that sends the data, so that the apparatus that sends the data can learn of data that is not received, to take a corresponding measure. This improves reliability of multicast transmission.

The communication method in this application may be applied to an RLC layer, or may be applied to a PDCP layer. If the method is applied to the RLC layer, an RLC layer entity is configured for data PDU sending and data PDU receiving. If the method is applied to the PDCP layer, a PDCP layer entity is configured for data PDU sending and data PDU receiving. For example, a base station sends a data PDU to a terminal. When the method is applied to the RLC layer, an entity that sends the data PDU is an RLC entity in the base station, and an entity for receiving the data PDU is an RLC entity in the terminal. When the method is applied to the PDCP layer, an entity that sends the data PDU is a PDCP entity in the base station, and an entity for receiving the data PDU is a PDCP entity in the terminal. An apparatus may be a terminal device or a base station device, and various entities of different types may exist in one apparatus, for example, a PDCP entity, an RLC entity, and a MAC entity. In addition, a plurality of entities of a same type may simultaneously work in one apparatus. The apparatus may perform various operations on the entity, for example, configuring, newly establishing, reestablishing, or releasing the entity. In addition, a base station in the present invention may work in a CU-DU (central unit-distributed unit central unit-distributed unit) architecture. A PDCP layer is located on a CU, an RLC layer is located on a DU, and the CU communicates with the DU through an Fl interface. In the CU-DU architecture, one CU may be connected to a plurality of DUs. One DU may be considered as one base station, or one DU and one CU may be integrated and considered as one base station.

In an apparatus, an entity for information sending and an entity for information receiving may be a same entity or may be two entities.

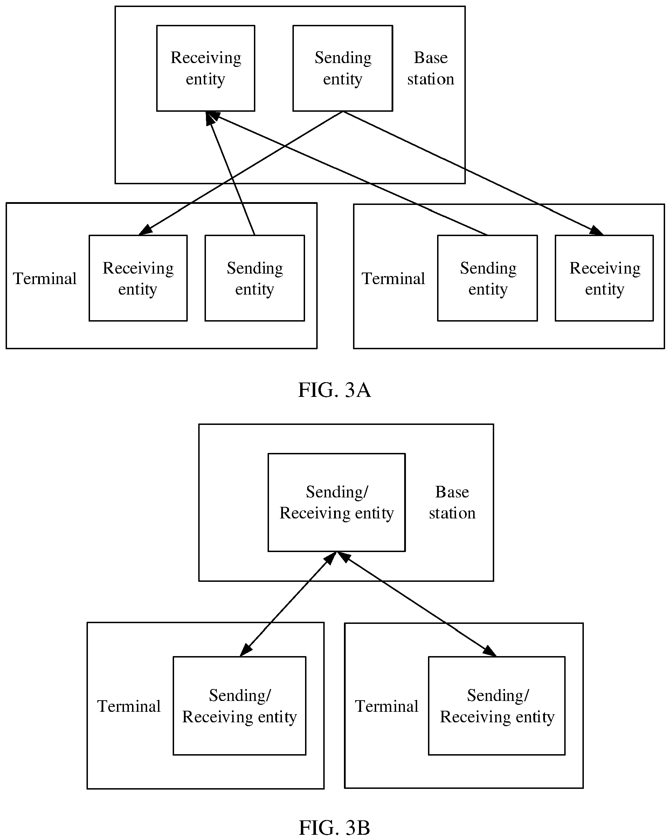

FIG. 3A is a schematic diagram of a communication architecture. An example in which a base station sends a data PDU to a plurality of terminals in a multicast mode is used for description. On a base station side, an entity for information sending and an entity for information receiving are two entities, and may be respectively referred to as a sending entity and a receiving entity. On a terminal side, an entity for information sending and an entity for information receiving are two entities, and may be respectively referred to as a sending entity and a receiving entity.

First, the base station sends a data PDU to a plurality of UEs through one sending entity in the base station, and each UE attempts to receive data through a receiving entity in the UE. Then, the UE feeds back, through a sending entity in the UE, a receiving status of the data PDU to the base station based on a receiving condition of the data PDU, where the receiving status is used to notify, to the base station, whether each data PDU is received. The sending entity in the UE may be configured by the base station by using RRC signaling. The base station sends configuration information to the terminal, to configure the sending entity for feeding back the receiving status of the data PDU. The configuration information may be carried in logical channel configuration signaling or radio bearer configuration signaling. The sending entity or the receiving entity in this application is not limited to an RLC entity or a PDCP entity, and may be another entity with a similar function. A radio bearer or a logical channel may alternatively be used to replace a function of the sending entity or the receiving entity. The receiving entity may also be configured by the base station by using RRC signaling. A manner of configuring the receiving entity is similar to that of configuring the sending entity, and is not described.

The RLC entity is used as an example. The base station may configure a radio bearer, a logical channel, or the sending entity that is configured to feed back the receiving status of the data PDU. The sending entity (or the radio bearer or the logical channel) has an association relationship with the receiving entity (or a multicast bearer or a multicast logical channel) on a UE side, and the association relationship is used to indicate that the receiving status that is of the data PDU and that is sent by the sending entity is for the data PDU received by the receiving entity.

The base station may configure a radio bearer, a logical channel, or the receiving entity. The receiving entity is configured to receive data and process data received in the multicast mode.

The sending entity in the UE may be configured with an AM mode or a UM mode. When being configured with the UM mode, the sending entity may send only the receiving status of the data PDU. When being configured with the AM mode, the sending entity may not only send the receiving status of the data PDU, but also receive downlink data or a downlink indication. The downlink indication may be polling information, and is used by the base station to indicate the UE to provide a feedback. In this case, the sending entity and the receiving entity are a same entity. FIG. 3B is a diagram of a communication architecture in which a sending entity and a receiving entity are a same entity.

Finally, a receiving entity in the base station may receive the receiving status that is of the data PDU and that is fed back by the sending entity in the terminal. The base station may determine, based on receiving statuses of the data PDU that are fed back by sending entities in the plurality of UEs, whether to retransmit the data PDU.

FIG. 3B is a schematic diagram of another communication architecture. On a base station side, an entity for information sending and an entity for information receiving are a same entity, and may be referred to as a sending/receiving entity. On a terminal side, an entity for information sending and an entity for information receiving are a same entity, and may be referred to as a sending/receiving entity. A sending/receiving entity in a base station sends a data PDU to a terminal. A sending/receiving entity in the terminal attempts to receive the data PDU sent by the base station, and feeds back a receiving status of the data PDU. The sending/receiving entity in the base station receives the receiving status that is of the data PDU and that is fed back by the terminal. The base station may determine, based on receiving statuses of the data PDU that are fed back by a plurality of UEs, whether to retransmit the data PDU.

The base station may configure a radio bearer, a logical channel, or the sending/receiving entity that is configured to receive the data PDU, process a data PDU received in a multicast mode, and feed back the receiving status of the data PDU.

The foregoing describes two architectures of multicast service transmission. One apparatus may send, through an entity of the apparatus, a data PDU to a plurality of apparatuses in a multicast transmission mode. The plurality of apparatuses for receiving the data PDU may respectively feed back receiving statuses of the data PDU through entities of the apparatuses, and the apparatus that sends the data PDU determines, based on the receiving statuses of the data PDU that are fed back, whether to retransmit the data PDU. In this application, reliability of multicast service transmission may be improved by using a feedback retransmission mechanism.

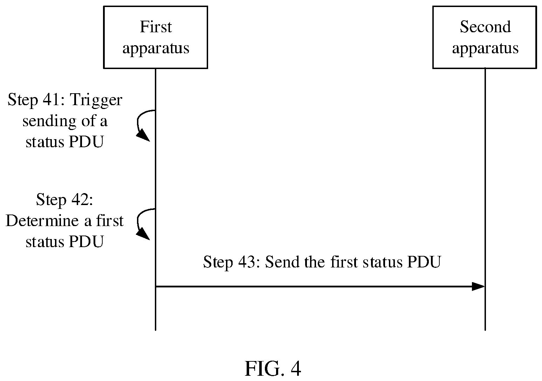

This application provides a communication method. As shown in FIG. 4, how an apparatus for receiving a data PDU feeds back a receiving status of the data PDU is specifically described. For ease of description, an apparatus that sends a data PDU in a multicast mode is referred to as a second apparatus. The second apparatus sends, in the multicast mode, the data PDU to a plurality of apparatuses (a plurality of apparatuses for receiving a same multicast service in a same time period, where the apparatuses may be in a same multicast group or multicast area (where the multicast area includes one or more cells)). Processes of feeding back a receiving status are the same for the plurality of apparatuses for receiving the data PDU. For ease of description, a specific process of feeding back a receiving status is described by using a first apparatus as an example. The first apparatus is any one of the plurality of apparatuses for receiving the data PDU sent by the second apparatus. With reference to FIG. 1, for example, the second apparatus may be the base station in FIG. 1, and the first apparatus may be any UE in the UE 1 to the UE 6. For example, the second apparatus may be the UE 5 in FIG. 1, and the first apparatus may be the UE 4 or the UE 6. In this embodiment of this application, the plurality of apparatuses are a set of apparatuses that are in a same multicast group or multicast area, that are configured with a same G-RNTI, or that attempt to receive a same multicast service in a same time period.

It should be noted that the specific process of feeding back a receiving status in this application is described for one logical channel.

Step 41: The first apparatus determines that a condition for sending a status PDU is triggered. Step 41 is optional.

The first apparatus may first determine whether a predefined or preconfigured trigger condition for feeding back a receiving status of the data PDU to the second apparatus is met. When determining that the trigger condition is met, the first apparatus feeds back the receiving status of the data PDU to the second apparatus. A process in which the first apparatus determines that the trigger condition for feeding back the receiving status of the data PDU is met is described below.

When feeding back the receiving status of the data PDU to the second apparatus, the first apparatus may feed back, to the second apparatus, a maximum value N of sequence numbers of data PDUs that are already received by the first apparatus and a sequence number of a data PDU that is not received by the first apparatus. The sequence number of the data PDU that is not received is less than N. Alternatively, the first apparatus feeds back, to the second apparatus, a value (N+1) obtained by adding 1 to a maximum value N of sequence numbers of data PDUs that are already received by the first apparatus and a sequence number of a data PDU that is not received by the first apparatus. Similarly, the sequence number of the data PDU that is not received is less than N.

In addition, in consideration of overheads, when data PDUs that are not received are fed back, not all data PDUs that are not received and whose sequence numbers are less than N need to be fed back, and only a receiving status of a PDU between a PDU with a maximum sequence number that is already fed back in a previous time and a PDU with a sequence number N or N+1 (including the PDU with the sequence number N or N+1) is fed back. For example, the UE receives packets 1 and 3. Because a packet 2 is not received, the UE feeds back receiving statuses of packets 1 to 3. In this case, the UE further receives a packet 5, and may determine that a packet 4 is not received, so that the UE needs to continue to trigger a status PDU for feedback. In this case, the UE only needs to feed back receiving statuses of packets 4 and 5 because receiving statuses of the packet 3 and a packet sent before the packet 3 are already fed back.

When the first apparatus feeds back the receiving status of the data PDU, the receiving status of the data PDU may be included in a status PDU (status PDU), or may be included in other information. For example, a new message format is designed to feed back the receiving status of the data PDU. PDUs are usually classified into a data PDU and a control PDU. The data PDU is usually used to transmit upper-layer data. The control PDU is usually used to transmit control information or a control command, and a status PDU is a type of PDU in control PDUs.

Step 42: The first apparatus determines a first status PDU.

When determining that the trigger condition for feeding back the receiving status of the data PDU is met, the first apparatus may feed back the receiving status of the data PDU to the second apparatus.

If the first apparatus feeds back the receiving status by using a status PDU, the first apparatus may determine a status PDU based on a receiving status of at least one data PDU from the second apparatus. For ease of description, the status PDU determined by the first apparatus is referred to as the first status PDU, the first status PDU is used to indicate the receiving status of the at least one data PDU from the second apparatus, and the at least one data PDU is transmitted by the second apparatus to the first apparatus in the multicast mode.

Step 43: The first apparatus sends the first status PDU to the second apparatus. Correspondingly, the second apparatus receives the first status PDU sent by the first apparatus.

The first apparatus feeds back the receiving status of the data PDU to the second apparatus, and another apparatus that is in the same multicast group or multicast area as the first apparatus or that attempts to receive the same multicast service in the same time period as the first apparatus also feeds back a receiving status of the data PDU to the second apparatus in a same manner. Certainly, in the multicast group or multicast area of the first apparatus, or in apparatuses for receiving the same multicast service at the same moment as the first apparatus, an apparatus that does not feed back a receiving status of the data PDU to the second apparatus because a trigger condition is not met may exist. In this way, the second apparatus may determine, based on the receiving status fed back by the first apparatus and receiving statuses of the data PDU that are fed back by a plurality of apparatuses that are in the same multicast group or multicast area as the first apparatus or that attempt to receive the same multicast service at the same moment as the first apparatus, a specific apparatus, in the multicast group or multicast area or in the first apparatus and the apparatuses that attempt to receive the same multicast service at the same moment as the first apparatus, that does not receive the data PDU. Further, the second apparatus determines, based on a requirement of the multicast service, whether the data PDU needs to be retransmitted. Therefore, reliability of the multicast service is improved.

The following several implementations each describe a process in which the first apparatus determines that the trigger condition for feeding back the receiving status of the data PDU is met.

Manner 1: The second apparatus sends, in the multicast mode, the data PDU to the plurality of apparatuses (including the first apparatus) that are in the multicast group or the multicast area, and the second apparatus may indicate some or all apparatuses in the multicast group to feed back receiving statuses of the data PDU. For example, the first apparatus indicates the first apparatus to feed back a receiving status of the data PDU. To be specific, the second apparatus sends indication information to the first apparatus, where the indication information is used to indicate to report the receiving status of the data PDU. Correspondingly, the first apparatus may receive the indication information from the second apparatus. When receiving the indication information from the second apparatus, the first apparatus determines that the trigger condition for feeding back the receiving status of the data PDU is met.

During unicast transmission, an apparatus that sends a data PDU uses one bit in a packet header of a data PDU to indicate an apparatus for receiving the data PDU to feed back a receiving status. In this application, when sending the indication information to the first apparatus, the second apparatus may include the indication information in a data PDU.

In another method, the indication information is not carried in a data packet header, but separate control information is sent, in a unicast mode, to an apparatus that needs to provide a feedback. The control information indicates the apparatus to feed back a receiving status of the data PDU. Further, it may indicate a specific multicast bearer for which a receiving status needs to be fed back, or indicate the apparatus to determine, based on a bearer used for sending the control information, for example, based on a preset association relationship, a specific multicast bearer for which a receiving status needs to be fed back. The control information may be a status report at an RLC layer or a PDCP layer, an RRC message, a MAC CE, or DCI.

In other words, when sending the indication information to the first apparatus, the second apparatus may include the indication information to the data PDU, a control PDU, media access control control element (element) (MAC CE for short) signaling, or downlink control information DCI. For ease of description, the data PDU carrying the indication information is referred to as a third data PDU, and the third data PDU is any data PDU sent by the second apparatus.

Manner 2: The first apparatus may also periodically report receiving statuses of data PDUs. For example, a timer is set in the first apparatus. For ease of description, the timer is referred to as a first timer. Duration of the first timer is T, and T is greater than 0, for example, may be at a millisecond level, for example, 100 ms or 20 ms. The first timer may be used to trigger reporting of a receiving status of a data PDU. Each time when reporting of a receiving status of a data PDU is triggered, the first apparatus may restart or start the first timer. It is assumed that the first timer does not run when the first apparatus reports the receiving status of the data PDU. In this case, the first apparatus starts the first timer. It is assumed that the first timer runs when the first apparatus reports the receiving status of the data PDU. In this case, the first apparatus restarts the first timer. When determining that the first timer expires, the first apparatus determines that the trigger condition for feeding back the receiving status of the data PDU is met.

Manner 3: The first apparatus may alternatively feed back the receiving status to the second apparatus when determining that a first data PDU fails to be received. For example, a sequence number of the first data PDU is X, where sequence numbers start from 0, and X may be a natural number greater than or equal to 1. The first apparatus does not receive the data PDU whose sequence number is X, and receives at least one data PDU whose sequence number is greater than X and at least one data PDU whose sequence number is less than X. There may be one or more first data PDUs. The first data PDU herein may be any data PDU sent by the second apparatus.

For example, the base station has consecutively sent data PDUs whose sequence numbers are 1, 2, and 3, and the UE first receives the data PDU whose sequence number is 1 and then receives the data PDU whose sequence number is 3. In this case, it may be determined that the data PDU whose sequence number is 2 is not received, that is, the data PDU whose sequence number is 2 fails to be received. In this case, the UE may feed back receiving statuses of the data PDUs, and the base station determines, based on the receiving statuses that are fed back, that the UE receives the data PDUs whose sequence numbers are 1 and 3, but does not receive the data PDU whose sequence number is 2. In this case, the first data PDU that fails to be received is the data PDU whose sequence number is 2.

For another example, the base station has consecutively sent data PDUs whose sequence numbers are 1 to 5, and the UE first receives the data PDU whose sequence number is 1, then receives the data PDU whose sequence number is 2, and then receives the data PDU whose sequence number is 5. In this case, it may be determined that the data PDUs whose sequence numbers are 3 and 4 are not received, that is, the data PDUs whose sequence numbers are 2 and 4 fail to be received. In this case, the UE may feed back receiving statuses of the data PDUs, and the base station determines, based on the receiving statuses that are fed back, that the UE receives the data PDUs whose sequence numbers are 1, 2, and 5, but does not receive the data PDUs whose sequence numbers are 3 and 4. In this case, the first data PDUs that fail to be received are the data PDUs whose sequence numbers are 3 and 4.

The foregoing manner 1, manner 2, and manner 3 are parallel. As long as the first apparatus determines that any one of the conditions is met, the first apparatus considers that the trigger condition for feeding back the receiving status of the data PDU is met. For example, before the first timer expires, the first apparatus receives the indication information for feeding back the receiving status of the data PDU. In this case, the first apparatus feeds back the receiving status of the data PDU, and enables the first timer to restart timing, that is, restarts the first timer. For another example, before the first timer expires, the first apparatus determines that the first data PDU fails to be received. In this case, the first apparatus feeds back the receiving status of the data PDU, and enables the first timer to restart timing.

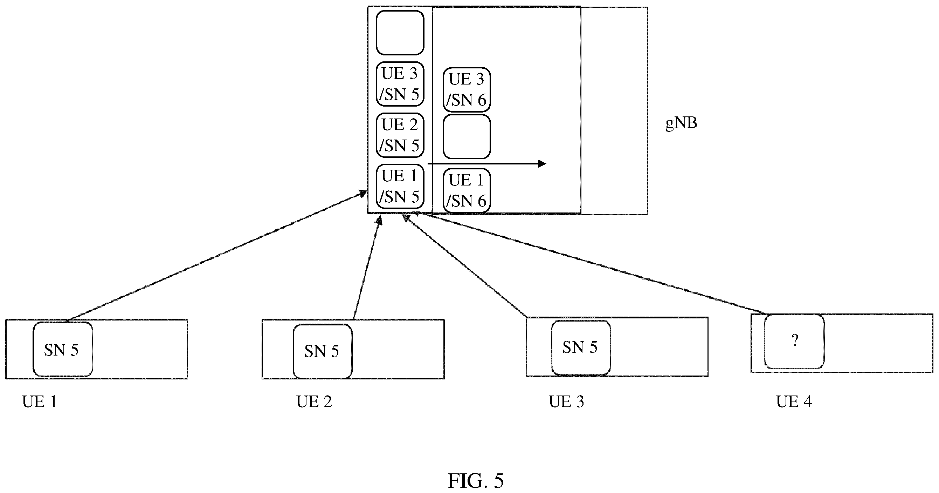

The foregoing manner 1, manner 2, and manner 3 are applicable to a case in which the first apparatus has been added to the multicast group for a period of time. If the first apparatus has just been added to the multicast group, the first apparatus does not know a specific sequence number of a data PDU from which the first apparatus needs to start monitoring, and may lose data without knowing that the data is lost. As shown in FIG. 5, it is assumed that UE 1, UE 2, and UE 3 in a multicast group attempt to receive a data PDU delivered by a base station (gNB), and the base station has delivered data PDUs whose sequence numbers SNs are 1 to 4. Next, the base station delivers a data PDU whose sequence number is 5. In this case, if a new apparatus (for example, UE 4) is added to the multicast group, the newly added UE 4 may successfully receive the data PDU whose sequence number is 5, or may not successfully receive the data PDU whose sequence number is 5. For the UE 4, if the UE 4 does not successfully receive the data PDU whose sequence number is 5, the UE 4 also does not know that the UE 4 has lost data, and does not feed back a receiving status for the data PDU whose sequence number is 5. Even if the base station indicates the UE 4 to feed back a receiving status of the data PDU, because the UE 4 does not receive any data PDU, the UE 4 cannot understand the instruction of the base station, and consequently cannot provide a feedback.

To enable the UE 4 to know how to feed back a receiving status, the base station may indicate the UE 4 to feed back a receiving status immediately after receiving the 1^{st} data PDU. Alternatively, the base station does not indicate the UE 4 to provide a feedback, and the UE 4 feeds back a receiving status immediately after receiving the 1^{st} data PDU. After receiving the 1^{st} data PDU, the UE 4 feeds back the receiving status, so that the base station knows a specific data PDU that is the 1^{st} data PDU received by the UE 4. Therefore, the base station may determine, based on a data PDU sending condition of the base station, whether the UE 4 has lost a data PDU, and further determines, based on a requirement of a multicast service, whether the data PDU needs to be retransmitted to the UE 4. In this way, reliability of the multicast service is improved.

Manner 4: The first apparatus may alternatively determine, when receiving a first data PDU, that the trigger condition for feeding back the receiving status of the data PDU is met. The first data PDU herein is the 1^{st} PDU received by the first apparatus. The 1^{st} PDU herein is the 1^{st} PDU received by an entity after the entity is established, where the entity is in the first apparatus and is configured to receive a data PDU, but is not necessarily the 1^{st} data PDU sent by an entity that is of a corresponding type in the second apparatus and that is configured to send a data PDU.

For example, when the data PDU is an RLC PDU, the entity configured to receive a data PDU is an RLC entity, and the entity configured to send a data PDU is an RLC entity. For another example, when the data PDU is a PDCP PDU, the entity configured to receive a data PDU is a PDCP entity, and the entity configured to send a data PDU is a PDCP entity.

Manner 5: The first apparatus receives a second data PDU, where the second data PDU is the 1^{st} PDU received by the first apparatus, a sequence number of the second data PDU is greater than a first sequence number, and the first sequence number is a sequence number that is of a first data PDU that should be received by the first apparatus and that is indicated by the second apparatus. The second data PDU herein is the 1^{st} PDU actually received by the first apparatus. The first PDU is the 1^{st} PDU that should be received by the first apparatus, which is indicated by the second apparatus.

The base station may further indicate a sequence number of a data PDU (the first data PDU) that should be received by the terminal for the first time. For example, the base station may send indication information to the UE 4, to indicate that a sequence number of the 1^{st} data PDU that should be received by the UE 4 is 5. If the sequence number of the 1^{st} data PDU (the second PDU) received by the UE 4 is 6, the UE 4 may determine that a data PDU whose sequence number is 5 fails to be received, that is, the UE 4 does not receive the data PDU whose sequence number is 5. In this case, the UE 4 may feed back a receiving status. The base station may determine, based on a data PDU sending condition of the base station, a specific data PDU that is lost by the UE 4, to determine, based on a requirement of a multicast service, whether to reselect the data PDU.

In the foregoing manner 1, the second apparatus may deliver the indication information to the plurality of apparatuses for receiving the data PDU in the multicast group or multicast area, to indicate the apparatuses to feed back receiving statuses. The mechanism may be referred to as a polling (polling) mechanism. Currently, in a unicast polling mechanism, an apparatus that sends a data PDU uses one bit in a header of a data PDU to indicate an apparatus for receiving the data PDU to feed back a receiving status. However, in multicast transmission, a plurality of apparatuses attempt to receive a same data PDU. If the unicast polling mechanism is directly used, all apparatuses for receiving the data PDU provide feedbacks. However, during actual application, an apparatus that sends the data PDU may not require all the apparatuses for receiving the data PDU to feed back receiving statuses, but requires only a part of apparatuses to feed back a receiving status.

For example, in the communication system shown in FIG. 1, the base station sends a data PDU to the UE 1 to the UE 6. Based on a service requirement, the base station may require only the UE 1 and the UE 2 to feed back receiving statuses, and other UEs may not need to feed back receiving statuses. Therefore, if the unicast polling mechanism is directly used, signaling overheads for feedback are increased.

Based on this, in this application, when the second apparatus sends the indication information to the plurality of apparatuses, the indication information is not only used to indicate to report a receiving status of the data PDU, but also may be used to indicate a specific apparatus that needs to report a receiving status of the data PDU. For example, the indication information sent by the second apparatus to the first apparatus is further used to indicate at least one of the plurality of apparatuses to report a receiving status of the data PDU, and the first apparatus is included in the at least one apparatus.

For example, when the indication information indicates at least one of the plurality of apparatuses to report a receiving status of the data PDU, the indication information may include an identifier of an apparatus, in the multicast group or multicast area, for feeding back a receiving status. An apparatus that receives the indication information determines whether the identifier of the apparatus that is included in the indication information is an identifier of the apparatus that receives the indication information, and if the identifier of the apparatus is the identifier of the apparatus that receives the indication information, the apparatus that receives the indication information determines that the apparatus needs to feed back a receiving status of the data PDU. For example, the first apparatus receives the indication information from the second apparatus, where the indication information is used to indicate to feed back a receiving status of the data PDU, and the indication information indicates an identifier of an apparatus that needs to feed back a receiving status of the data PDU. When determining that the identifier in the indication information is an identifier of the first apparatus, the first apparatus determines the first status PDU, and sends the first status PDU to the second apparatus, where the first status PDU is used to indicate the receiving status of the at least one data PDU from the second apparatus. With reference to the communication system shown in FIG. 1, the base station sends a data PDU to the UE 1 to the UE 6, and indication information sent by the base station indicates identifiers of the UE 2 and the UE 4 that need to feed back receiving statuses of the data PDU. If the first apparatus is the UE 3, and the UE 3 determines that an identifier of the UE 3 is not included, the UE 3 does not need to feed back a receiving status.

The second apparatus may classify the plurality of apparatuses into a plurality of types based on information about the plurality of apparatuses, in the multicast group or multicast area, for receiving the data PDU, and the indication information may indicate a type of apparatus, several types of apparatuses, or all apparatuses that need to provide feedbacks. Classification may be performed based on capabilities of the apparatuses, statuses of the apparatuses, types of the apparatuses, and the like.

For example, the apparatus for receiving the data PDU is UE. When classification is performed based on capabilities of UEs, UEs having a specific capability may be classified into one category, and UEs not having the specific capability may be classified into one category. The capability may be a capability of feeding back a receiving status of a data PDU.

For example, when classification is performed based on statuses of UEs, UEs in a connected state may be classified into one category, and UEs in an idle state may be classified into one category. The second apparatus may include, in the indication information, a status of UE for feeding back a receiving status of the data PDU, for example, the connected state. In this way, the second apparatus indicates the UE in the connected state to provide a feedback, and the UE in the idle state does not need to provide a feedback. After receiving the indication information, the first apparatus (UE) may determine whether the first apparatus (UE) is in the connected state. If the first apparatus (UE) is in the connected state, the first apparatus (UE) feeds back the receiving status of the data PDU; if the first apparatus (UE) is not in the connected state, the first apparatus does not feed back the receiving status of the data PDU.

For another example, when classification is performed based on types of UEs, the UEs may be classified into IoT (internet of things) UE, eMBB UE (for example, a mobile phone), MTC (machine type communication) UE, URLLC (ultra-reliable low-latency communication) UE, and the like, and the second apparatus may include, in the indication information, a type of UE for feeding back a receiving status of the data PDU.

When the UEs are classified into several groups and then the indication information is sent, the multicast mode may be used to send the indication information to a group of UEs. In this way, compared with a solution in which the indication information is sent for each UE, downlink signaling overheads are reduced.

The foregoing described manner is used to indicate a specific apparatus that needs to feed back a receiving status of the data PDU, to avoid a problem that all the apparatuses for receiving the data PDU need to provide feedbacks each time when polling is performed and reduce signaling overheads for feedback.

In this application, a second apparatus sends a data PDU to at least one apparatus in a multicast group or multicast area in a multicast mode. For ease of description, the sent data PDU is referred to as a first data PDU, and a sequence number of the first data PDU is X. X is a natural number greater than or equal to 0. Sometimes a relatively large quantity of apparatuses or all apparatuses receive the first data PDU, but sometimes a relatively small quantity of apparatuses receive the first data PDU and most apparatuses lose data. The second apparatus may determine, based on a service requirement, whether to resend the first data PDU. For example, the second apparatus may predetermine a quantity threshold. For ease of description, the quantity threshold is referred to as a third threshold, and the third threshold is used by the second apparatus to determine whether to resend the first data PDU. The second apparatus may determine, based on a receiving status that is of the data PDU and that is reported by the apparatus in the multicast group or the multicast area, whether a quantity of apparatuses that successfully receive the first data PDU in the at least one apparatus meets the third threshold. If the quantity meets the third threshold, the second apparatus may not resend the first data PDU; if the quantity does not meet the third threshold, the second apparatus may resend the first data PDU. The third threshold is related to a quantity of apparatuses in the multicast group or the multicast area, for example, is determined based on a percentage of the quantity of apparatuses that successfully receive the first data PDU to the quantity of apparatuses in the multicast group or the multicast area.

If the second apparatus determines to resend the first data PDU, the second apparatus may further resend the first data PDU whose sequence number is X to the at least one apparatus in the multicast group or the multicast area in the multicast mode. Alternatively, the second apparatus may determine a third apparatus that does not successfully receive the first data PDU whose sequence number is X, and resend the first data PDU to the third apparatus in a unicast mode. The third apparatus is included in the at least one apparatus. There may be one or more third apparatuses.

In transmission of a multicast service, the second apparatus needs to send a plurality of data PDUs to the at least one apparatus in the multicast group or the multicast area in the multicast mode. When the plurality of data PDUs are sent, a sending window may be preset, where the sending window specifies a quantity of consecutively sent data PDUs. The second apparatus further needs to determine an occasion on which the sending window can be moved to send the data PDUs again. The second apparatus may preset a condition, which is referred to as a first condition. When the first condition is met, the second apparatus sends a second data PDU to the at least one apparatus in the multicast mode, where a sequence number of the second data PDU is X+n, and n is a natural number greater than or equal to 1. A maximum value of a sequence number of a data PDU currently sent by the second apparatus to the at least one apparatus in the multicast mode is X+n-1.

For example, the second apparatus may maintain a first timer. Duration of the first timer is T, and T is greater than 0, for example, may be at a millisecond level, for example, 70 ms or 50 ms. The first timer may be used to trigger sending of a data PDU. When sending the first data PDU whose sequence number is X, the second apparatus may restart or start the first timer. It is assumed that the first timer does not run when the second apparatus sends the first data PDU. In this case, the second apparatus starts the first timer. It is assumed that the first timer runs when the second apparatus sends the first data PDU. In this case, the second apparatus restarts the first timer. When determining that the first timer expires, the second apparatus determines that the first condition is met.

For example, three data PDUs may be consecutively sent in the set sending window. In this case, the second apparatus may first consecutively send data PDUs whose sequence numbers are 1 to 3, where the sequence number X of the first data PDU is 1, and the maximum value X+n-1 of the sequence number of the data PDU sent by the second apparatus is 3. When determining that the first timer expires, the second apparatus moves the sending window, and then sends a data PDU whose sequence number is X+n=4, that is, the sequence number of the second data PDU is 4.

For another example, the second apparatus sends a data PDU whose sequence number is 5 (that is, the sequence number X of the first data PDU is 5) in the sending window, and the maximum value X+n-1 of the sequence number of the data PDU sent by the second apparatus is 7. When determining that the first timer expires, the second apparatus moves the sending window, and then sends a data PDU whose sequence number is 8, that is, the sequence number of the second data PDU is 8.

If the multicast service has a relatively high requirement on reliability, a relatively large quantity of apparatuses may be required to receive the first data PDU. The second apparatus may determine, based on a receiving condition of the first data PDU, whether to send the data PDU again.

For example, the second apparatus receives at least one status PDU, and determines, based on the at least one status PDU, a receiving status in the at least one apparatus of the first data PDU. The second apparatus may determine whether the quantity of apparatuses that successfully receive the first data PDU in the at least one apparatus in the multicast group or the multicast area meets (may be greater than, or may be greater than or equal to) a first threshold, and if the quantity meets the threshold, the second apparatus determines that the first condition is met. For example, the second apparatus may set a counter for the first data PDU, where counting starts from 0. Each time when the second apparatus determines that one apparatus receives the first data PDU, the counter is increased by 1. When a value of the counter meets the first threshold, the second apparatus determines that the first condition is met.

If the second apparatus determines that the first condition currently met is that the quantity of apparatuses that successfully receive the first data PDU in the at least one apparatus meets the first threshold, the second apparatus disables the first timer, where the first timer is started when the second apparatus sends the first data PDU.

If the second apparatus determines that the first condition currently met is that the first timer expires, the second apparatus may re-determine a quantity of apparatuses that successfully receive the data PDU, for example, reset the counter.

In this application, if an apparatus in the multicast group or the multicast area often cannot receive a data PDU sent by the second apparatus in the multicast mode, it may be not suitable for the apparatus to receive data in the multicast transmission mode. The second apparatus may take measures to solve the problem.

For example, the second apparatus sends indication information to a fourth apparatus. Correspondingly, the fourth apparatus receives the indication information from the second apparatus. A quantity of consecutive data PDUs that are not received by the fourth apparatus reaches a second threshold, and the consecutive data PDUs that are not received are sent by the second apparatus in the multicast mode.

It should be noted that the fourth apparatus is used only to indicate an apparatus for which a quantity of consecutive data PDUs that are not received reaches the second threshold, and the fourth apparatus is included in the at least one apparatus. That is, the fourth apparatus may be any apparatus in the multicast group or the multicast area. For example, the fourth apparatus is the foregoing described first apparatus that feeds back the first status PDU.

For example, the indication information is used to indicate the fourth apparatus to suspend receiving of data sent by the second apparatus in the multicast mode, where the data may be a data PDU, or may be data of another type;
the indication information is used to indicate the fourth apparatus to release or delete first configuration information, where the first configuration information is used to configure the fourth apparatus to receive data in the multicast mode; or
the indication information is used to indicate the fourth apparatus to release or delete second configuration information, where the second configuration information is used to configure the fourth apparatus to provide a feedback for data that the fourth apparatus attempts to receive in the multicast mode.

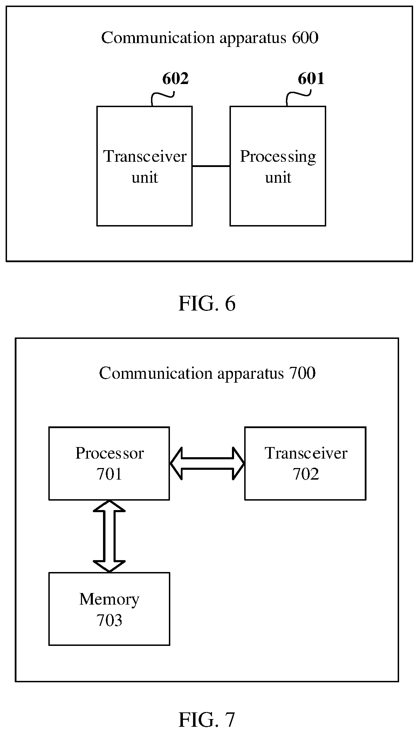

Based on a same technical concept as the communication method, as shown in FIG. 6, an embodiment of this application further provides a communication apparatus 600. The communication apparatus 600 includes a processing unit 601 and a transceiver unit 602.

In an embodiment, the communication apparatus 600 may be a communication apparatus on a first apparatus side. The communication apparatus 600 may be configured to perform an operation of the first apparatus. Specifically, the communication apparatus 600 may be the first apparatus itself, or may be an apparatus including a plurality of function units inside the first apparatus, and the communication apparatus 600 may alternatively be a chip.

The processing unit 601 is configured to determine a first status protocol data unit PDU, where the first status PDU is used to indicate a receiving status of at least one data PDU from a second apparatus, and the at least one data PDU is sent by the second apparatus in a multicast mode.

The transceiver unit 602 is configured to send the first status PDU to the second apparatus.

In a possible implementation, before determining the first status PDU, the processing unit 601 is further configured to determine that at least one of the following conditions is triggered:
indication information is received from the second apparatus through the transceiver unit 602, where the indication information is used to indicate to report a receiving status of the data PDU;
a first timer expires, where duration of the first timer is T, and T is greater than 0;
a first data PDU is received through the transceiver unit 602, where the first data PDU is the 1^{st} PDU received by the transceiver unit 602; and
the processing unit 601 determines that a first data PDU fails to be received.

In a possible implementation, when determining that the first data PDU fails to be received, the processing unit 601 is specifically configured to: receive a second data PDU through the transceiver unit 602, where the second data PDU is the 1^{st} PDU received by the transceiver unit 602, a sequence number of the second data PDU is greater than a first sequence number, and the first sequence number is a sequence number that is of the first data PDU and that is indicated by the second apparatus; or
receive, through the transceiver unit 602, at least one data PDU whose sequence number is greater than a first sequence number and at least one data PDU whose sequence number is less than the first sequence number, where the first sequence number is a sequence number of the first data PDU.

In a possible implementation, the indication information used to indicate to report the receiving status of the data PDU is carried in a third data PDU, a control PDU, media access control control element MAC CE signaling, or downlink control information DCI.

In a possible implementation, the indication information used to indicate to report the receiving status of the data PDU is further used to indicate at least one of a plurality of apparatuses to report a receiving status of the data PDU, and the first apparatus is included in the at least one apparatus.

In another embodiment, the communication apparatus 600 may be an apparatus on a second apparatus side. The apparatus 600 may be configured to perform an operation of the second apparatus. Specifically, the communication apparatus 600 may be the second apparatus itself, or may be an apparatus including a plurality of function units inside the second apparatus, and the communication apparatus 600 may alternatively be a chip inside the second apparatus.

The processing unit 601 is configured to generate a first data PDU.

The transceiver unit 602 is configured to send the first data PDU to at least one apparatus in a multicast mode, where a sequence number of the first data PDU is X, and X is a natural number greater than or equal to 0.

The transceiver unit 602 is further configured to resend the first data PDU to the at least one apparatus in the multicast mode, or the processing unit 601 determines that the first data PDU is not successfully received by a third apparatus and sends, through the transceiver unit 602, the first data PDU to the third apparatus in a unicast mode, where the third apparatus is included in the at least one apparatus.

In a possible implementation, the processing unit 601 is further configured to: when determining that a first condition is met, send a second data PDU to the at least one apparatus in the multicast mode through the transceiver unit 602, where a sequence number of the second data PDU is X+n, and n is a natural number greater than or equal to 1.

The first condition is that a quantity of apparatuses that successfully receive the first data PDU in the at least one apparatus meets a first threshold, or the first condition is that a first timer expires, where the first timer is started when the second apparatus sends the first data PDU.

In a possible implementation, the transceiver unit 602 is further configured to receive at least one status PDU; and
the processing unit 601 is further configured to determine, based on the at least one status PDU, a receiving status in the at least one apparatus of the first data PDU.

In a possible implementation, the transceiver unit 602 is further configured to send indication information to a fourth apparatus, where the fourth apparatus is included in the at least one apparatus.

A quantity of consecutive data PDUs that are not received by the fourth apparatus reaches a second threshold, and the consecutive data PDUs that are not received are sent by the second apparatus in the multicast mode.

In a possible implementation, the indication information is used to indicate the fourth apparatus to suspend receiving of a data PDU sent by the second apparatus in the multicast mode;
the indication information is used to indicate the fourth apparatus to release or delete first configuration information, where the first configuration information is used to configure the fourth apparatus to receive a data PDU in the multicast mode; or
the indication information is used to indicate the fourth apparatus to release or delete second configuration information, where the second configuration information is used to configure the fourth apparatus to provide a feedback for data that the fourth apparatus attempts to receive in the multicast mode.

Based on a same technical concept as the foregoing communication method, as shown in FIG. 7, an embodiment of this application further provides a communication apparatus 700. The communication apparatus 700 includes a processor 701, and optionally, further includes a transceiver 702 and a memory 703. In an implementation, the processor 701 is configured to invoke a group of programs, and when the programs are executed, the processor 701 is enabled to perform corresponding operations in the communication method. The memory 703 is configured to store the programs executed by the processor 701. Based on related descriptions of FIG. 6, the processing unit 601 in FIG. 6 may be implemented by using the processor 701, and the transceiver unit 602 in FIG. 6 may be implemented by using the transceiver 702.

The processor may be a central processing unit (central processing unit, CPU), a network processor (network processor, NP), or a combination of a CPU and an NP.

The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL) device, another programmable logic device, a discrete gate or transistor logic device, a discrete hardware component, or the like, or any combination thereof. The general-purpose processor may be a microprocessor, or the processor may be any conventional processor or the like.

It should be further understood that the memory mentioned in the embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application is intended to include but is not limited to these memories and any other memory of a suitable type.

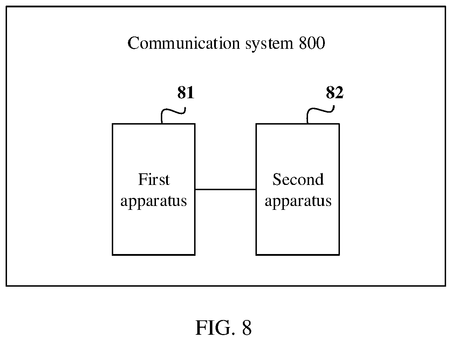

As shown in FIG. 8, a communication system is provided. The system includes a first apparatus 81 and a second apparatus 82 that are configured to perform the communication method. The system may further include another apparatus that is in a same multicast group or multicast area as the first apparatus.

An embodiment of this application provides a computer storage medium. The computer storage medium stores a computer program, and the computer program includes instructions used to perform the communication method.

An embodiment of this application provides a computer program product including instructions. When the computer program product is run on a computer, the computer is enabled to perform the communication method provided above.

All or some of the foregoing embodiments may be implemented by using software, hardware, firmware, or any combination thereof. When the embodiments are implemented by using software, all or some of the embodiments may be implemented in a form of a computer program product. The computer program product includes one or more computer instructions. When the computer instructions are loaded and executed on a computer, the procedures or functions according to the embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (Digital Video Disc, DVD), a semiconductor medium (for example, a solid-state drive (Solid State Disk, SSD)), or the like.

Any communication apparatus provided in the embodiments of this application may alternatively be a chip.

Persons skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

## Claims

1. A communication method, comprising:
determining (41), in parallel, by a first apparatus (81), that at least one of the following conditions is triggered: the first apparatus (81) receives an
indication information from a second apparatus (82), wherein the indication information is used to indicate to report a receiving status of a data protocol data unit, PDU; a first timer expires, wherein a
duration of the first timer is T, and T is greater than 0, wherein the first timer is used to periodically report receiving statuses of data PDUs;
a respective entity in the first apparatus (81) receives a first data PDU, wherein the first data PDU is the 1^{st} PDU received by the entity after the entity is established in the first apparatus (81); and
the first apparatus (81) determines, based on a sequence number, that a data PDU fails to be received;
determining (42), by the first apparatus (81), a first status PDU, wherein the first status PDU is used to indicate a receiving status of at least one data PDU from the second apparatus (82), and the at least one data PDU is sent by the second apparatus (82) in a multicast mode; and
sending (43), by the first apparatus (81), the first status PDU to the second apparatus (82).

2. The method according to claim 1, wherein that the first apparatus (81) determines that a first data PDU fails to be received comprises:
the first apparatus (81) receives a second data PDU, wherein the second data PDU is the 1^{st} PDU received by the first apparatus (81), a sequence number of the second data PDU is greater than a first sequence number, and the first sequence number is a sequence number that is of the first data PDU and that is indicated by the second apparatus (82); or
a sequence number of the first data PDU is a first sequence number, and the first apparatus (81) receives at least one data PDU whose sequence number is greater than the first sequence number and at least one data PDU whose sequence number is less than the first sequence number.

3. The method according to claim 1, wherein the indication information from the second apparatus (82) is carried in a third data PDU, a control PDU, media access control control element, MAC CE, signaling, or downlink control information, DCI.

4. The method according to claim 1 or 3, wherein the indication information from the second apparatus (82) is further used to indicate at least one of a plurality of apparatuses to report a receiving status of the data PDU, and the first apparatus (81) is comprised in the at least one apparatus.

5. The method according to any preceding claim, comprising:
sending, by the second apparatus (82), the
indication information to the first apparatus (81), wherein the indication information is used to indicate to report the receiving status of the data PDU; and
receiving, by the second apparatus (82), the
first status PDU, sent by the first apparatus (81), wherein the first status PDU is used to indicate the
receiving status of at least one data PDU, and the at least one data PDU is sent by the second apparatus (82) in a multicast mode.

6. The method according to claim 5, wherein the indication information is carried in a third data PDU, a control PDU, media access control control element, MAC CE, signaling, or downlink control information, DCI.

7. The method according to claim 5, wherein the indication information is further used to indicate at least one of a plurality of apparatuses to report a receiving status of the data PDU, and the first apparatus (81) is comprised in the at least one apparatus.

8. A communication apparatus (600), configured to perform the method according to any one of claims 1 to 4.

9. A communication system comprising a communication apparatus according to claim 8, configured to perform the method according to any one of claims 5 to 7.

10. A computer readable storage medium comprising instructions which, when executed by a communication apparatus according to claim 8, cause the communication apparatus to carry out the method according to any one of claims 1 to 4.

11. A computer readable storage medium comprising instructions which, when executed by a communication system according to claim 9, cause the communication system to carry out the method according to any one of claims 5 to 7.

## Patentansprüche

1. Kommunikationsverfahren, umfassend:
paralleles Bestimmen (41), durch eine erste Vorrichtung (81), dass mindestens eine der folgenden Bedingungen ausgelöst wird:
die erste Vorrichtung (81) empfängt eine Angabeinformation von einer zweiten Vorrichtung (82), wobei die Angabeinformation verwendet wird, anzugeben, einen Empfangsstatus einer Datenprotokoll-Dateneinheit, PDU, zu berichten;
ein erster Zeitgeber läuft ab, wobei eine Dauer des ersten Zeitgebers T ist und T größer als 0 ist, wobei der erste Zeitgeber verwendet wird, Empfangsstatus von Daten-PDUs periodisch zu berichten;
eine jeweilige Entität in der ersten Vorrichtung (81) empfängt eine erste Daten-PDU, wobei die erste Daten-PDU die 1. durch die Entität empfangene PDU ist, nachdem die Entität in der ersten Vorrichtung (81) eingerichtet wird, und
die erste Vorrichtung (81) bestimmt, basierend auf einer Sequenznummer, dass eine Daten-PDU nicht empfangen wird,
Bestimmen (42), durch die erste Vorrichtung (81), einer ersten Status-PDU, wobei die erste Status-PDU verwendet wird, einen Empfangsstatus mindestens einer Daten-PDU von der zweiten Vorrichtung (82) anzugeben, und die mindestens eine Daten-PDU durch die zweite Vorrichtung (82) in einem Gruppenrufmodus gesandt wird, und
Senden (43), durch die erste Vorrichtung (81), der ersten Status-PDU an die zweite Vorrichtung (82).

2. Verfahren nach Anspruch 1, wobei, dass die erste Vorrichtung (81) bestimmt, dass eine erste Daten-PDU nicht empfangen wird, Folgendes umfasst:
die erste Vorrichtung (81) empfängt eine zweite Daten-PDU, wobei die zweite Daten-PDU die 1. durch die erste Vorrichtung (81) empfangene PDU ist, eine Sequenznummer der zweiten Daten-PDU größer als eine erste Sequenznummer ist und die erste Sequenznummer eine Sequenznummer ist, die von der ersten Daten-PDU ist und die durch die zweite Vorrichtung (82) angegeben wird, oder
eine Sequenznummer der ersten Daten-PDU eine erste Sequenznummer ist und die erste Vorrichtung (81) mindestens eine Daten-PDU, deren Sequenznummer größer als die erste Sequenznummer ist, und mindestens eine Daten-PDU, deren Sequenznummer kleiner als die erste Sequenznummer ist, empfängt.

3. Verfahren nach Anspruch 1, wobei die Angabeinformation von der zweiten Vorrichtung (82) in einer dritten Daten-PDU, einer Steuer-PDU, einer Medienzugangssteuerung-Steuerelement- bzw. MAC-CE-Signalisierung oder Abwärtsstrecken-Steuerinformationen, DCI, getragen wird.

4. Verfahren nach Anspruch 1 oder 3, wobei die Angabeinformation von der zweiten Vorrichtung (82) ferner verwendet wird, mindestens einer einer Vielzahl von Vorrichtungen anzugeben, einen Empfangsstatus der Daten-PDU zu berichten, und die erste Vorrichtung (81) in der mindestens einen Vorrichtung enthalten ist.

5. Verfahren nach einem der vorhergehenden Ansprüche, umfassend:
Senden, durch die zweite Vorrichtung (82), der Angabeinformation an die erste Vorrichtung (81), wobei die Angabeinformation verwendet wird, anzugeben, den Empfangsstatus der Daten-PDU zu berichten; und
Empfangen, durch die zweite Vorrichtung (82), der durch die erste Vorrichtung (81) gesandten ersten Status-PDU, wobei die erste Status-PDU verwendet wird, den Empfangsstatus mindestens einer Daten-PDU anzugeben, und die mindestens eine Daten-PDU durch die zweite Vorrichtung (82) in einem Gruppenrufmodus gesandt wird.

6. Verfahren nach Anspruch 5, wobei die Angabeinformation in einer dritten Daten-PDU, einer Steuer-PDU, einer Medienzugangssteuerung-Steuerelement- bzw. MAC-CE-Signalisierung oder Abwärtsstrecken-Steuerinformationen, DCI, getragen wird.

7. Verfahren nach Anspruch 5, wobei die Angabeinformation ferner verwendet wird, mindestens einer einer Vielzahl von Vorrichtungen anzugeben, einen Empfangsstatus der Daten-PDU zu berichten, und die erste Vorrichtung (81) in der mindestens einen Vorrichtung enthalten ist.

8. Kommunikationsvorrichtung (600), konfiguriert zum Durchführen des Verfahrens nach einem der Ansprüche 1 bis 4.

9. Kommunikationssystem, umfassend eine Kommunikationsvorrichtung nach Anspruch 8, konfiguriert zum Durchführen des Verfahrens nach einem der Ansprüche 5 bis 7.

10. Computerlesbares Speichermedium, umfassend Anweisungen, die, wenn sie durch eine Kommunikationsvorrichtung nach Anspruch 8 ausgeführt werden, die Kommunikationsvorrichtung veranlassen, das Verfahren nach einem der Ansprüche 1 bis 4 auszuführen.

11. Computerlesbares Speichermedium, umfassend Anweisungen, die, wenn sie durch ein Kommunikationssystem nach Anspruch 9 ausgeführt werden, das Kommunikationssystem veranlassen, das Verfahren nach einem der Ansprüche 5 bis 7 auszuführen.

## Revendications

1. Procédé de communication comprenant :
la détermination (41), en parallèle, par un premier appareil (81), qu'au moins une des conditions suivantes est déclenchée :
le premier appareil (81) reçoit des informations d'indication d'un deuxième appareil (82), les informations d'indication étant utilisées pour signaler un état de réception d'une unité de données de protocole, PDU, de données ;
une première temporisation expire, une durée de la première temporisation étant T, et T étant supérieur à 0, la première temporisation étant utilisée pour signaler périodiquement l'état de réception des PDU de données ;
une entité respective du premier appareil (81) reçoit une première PDU de données, la première PDU de données étant la première PDU reçue par l'entité après l'établissement de l'entité dans le premier appareil (81) ; et
le premier appareil (81) détermine, sur la base d'un numéro de séquence, qu'une PDU de données n'a pas été reçue ;
la détermination (42), par le premier appareil (81), d'une première PDU d'état, la première PDU d'état étant utilisée pour indiquer un état de réception d'au moins une PDU de données provenant du deuxième appareil (82), et l'au moins une PDU de données étant envoyée par le deuxième appareil (82) dans un mode de multidiffusion ; et
l'envoi (43), par le premier appareil (81), de la première PDU d'état au deuxième appareil (82).

2. Procédé selon la revendication 1, le fait que le premier appareil (81) détermine qu'une première PDU de données n'a pas été reçue comprenant :
le premier appareil (81) reçoit une deuxième PDU de données, la deuxième PDU de données étant la première PDU reçue par le premier appareil (81), un numéro de séquence de la deuxième PDU de données étant supérieur à un premier numéro de séquence, et le premier numéro de séquence étant un numéro de séquence qui est de la première PDU de données et qui est indiqué par le deuxième appareil (82) ; ou
un numéro de séquence de la première PDU de données étant un premier numéro de séquence, et le premier appareil (81) recevant au moins une PDU de données dont le numéro de séquence est supérieur au premier numéro de séquence et au moins une PDU de données dont le numéro de séquence est inférieur au premier numéro de séquence.

3. Procédé selon la revendication 1, les informations d'indication du deuxième appareil (82) étant transportées dans une troisième PDU de données, une PDU de commande, une signalisation d'élément de commande de commande d'accès au support, MAC CE, ou des informations de commande de liaison descendante, DCI.

4. Procédé selon la revendication 1 ou 3, les informations d'indication provenant du deuxième appareil (82) étant en outre utilisées pour indiquer à au moins un appareil parmi une pluralité d'appareils de signaler un état de réception de la PDU de données, et le premier appareil (81) étant compris dans l'au moins un appareil.

5. Procédé selon n'importe quelle revendication précédente, comprenant :
l'envoi, par le deuxième appareil (82), des informations d'indication au premier appareil (81), les informations d'indication étant utilisées pour indiquer de signaler l'état de réception de la PDU de données ; et
la réception, par le deuxième appareil (82), de la première PDU d'état, envoyée par le premier appareil (81), la première PDU d'état étant utilisée pour indiquer l'état de réception d'au moins une PDU de données, et l'au moins une PDU de données étant envoyée par le deuxième appareil (82) en mode multidiffusion.

6. Procédé selon la revendication 5, les informations d'indication étant transportées dans une troisième PDU de données, une PDU de commande, un élément de commande de commande d'accès au support, une signalisation MAC CE, ou des informations de commande de liaison descendante, DCI.

7. Procédé selon la revendication 5, les informations d'indication étant en outre utilisées pour indiquer à au moins un appareil parmi une pluralité d'appareils de signaler un état de réception de la PDU de données, et le premier appareil (81) étant compris dans l'au moins un appareil.

8. Appareil de communication (600), configuré pour réaliser le procédé selon l'une quelconque des revendications 1 à 4.

9. Système de communication comprenant un appareil de communication selon la revendication 8, configuré pour réaliser le procédé selon l'une quelconque des revendications 5 à 7.

10. Support de stockage lisible par ordinateur comprenant des instructions qui, lorsqu'elles sont exécutées par un appareil de communication selon la revendication 8, amènent l'appareil de communication à mettre en oeuvre le procédé selon l'une quelconque des revendications 1 à 4.

11. Support de stockage lisible par ordinateur comprenant des instructions qui, lorsqu'elles sont exécutées par un système de communication selon la revendication 9, amènent le système de communication à mettre en oeuvre le procédé selon l'une quelconque des revendications 5 à 7.
